# EUROPEAN PATENT APPLICATION

(11) **EP 4 721 956 A1**
(43) Date of publication of application: **08.04.2026**
(21) Application number: 24830699.5
(22) Date of filing: 24.06.2024
(51) Int. Cl.: B29C 64/209, B29C 64/295, B33Y 30/00

(54) **GUIDE MEMBER FOR MELTING 3D PRINTING CONSUMABLE, GUIDE ASSEMBLY, MELTING ASSEMBLY AND MANUFACTURING METHOD THEREFOR, AND 3D PRINTER**

(30) Priority: 25.06.2023 CN 202310753784
(71) Applicant: Zhengzhou Suzao Technology Co., Ltd., Zhengzhou, Henan 450048 (CN)
(72) Inventor: SHEN, Kang, Zhengzhou, Henan 450000 (CN); WANG, Qindong, Zhengzhou, Henan 450000 (CN); DUAN, Zhihui, Zhengzhou, Henan 450000 (CN); LU, Chuangyi, Zhengzhou, Henan 450000 (CN)
(74) Representative: Vogelbruch, Keang
(86) International application number: PCT/CN2024/101006
(87) International publication number: WO 2025/002057

(57) **Abstract**

The present disclosure relates to the technical field of 3D printing, and provides a melting assembly for melting a 3D printing consumable and a 3D printer. The melting assembly configured to melt a 3D printing consumable comprises: a guide member, configured to guide the preheated 3D printing consumable to flow and configured to heat the 3D printing consumable, wherein the guide member is provided with at least two first flow channels and a second flow channel, the first flow channels are arranged in the circumferential direction of the second flow channel, and the cross-sectional area of the second flow channel is smaller than that of each first flow channel. By means of the technical solution of the present disclosure, the outer surface of a heated consumable can be stripped, and an inner core of the consumable can be directly heated, thereby increasing the speed of heating the consumable.

## Description

### CROSS REFERENCE TO THE RELATED APPLICATIONS

The present invention claims priority to Chinese Patent Application No. 2023107537844 filed with the China National Intellectual Property Administration on June 25, 2023, and entitled "MELTING ASSEMBLY FOR MELTING 3D PRINTING FILAMENT AND 3D PRINTER", which is incorporated in the present invention by reference in entirety.

### TECHNICAL FIELD

The present invention relates to the technical field of 3D printing, and specifically to a melting assembly for melting a 3D printing filament (consumable), a guide member and a manufacturing method therefor, a guide assembly and a manufacturing method therefor, and a 3D printer.

### BACKGROUND

With the increasingly mature development of 3D printing technology, the speed of 3D printers continues to increase. To achieve a high-speed and high-quality printing effect, traditional melting technology of nozzles can no longer meet the needs of high-speed printing.

In the prior art, the thermal conductivity of filaments is generally below 1 W/m·K. For melting filaments, most methods involve increasing the number of flow channels within the nozzle to increase the contact area between the filament and the nozzle, thus increasing the melting rate of the filament. However, in such solutions, the radial dimensions of multiple flow channels are generally consistent. When the flow channels are filled with the filament, there is a distance between the filament located at the center of the flow channel and the filament at the periphery that first receives heat. Therefore, by the time heat is transferred to the filament at the center of the flow channel, some heat loss occurs. Furthermore, the inherently low thermal conductivity of the filament itself leads to low melting efficiency of the filament at the center of the flow channel, further compromising the overall melting rate of the filament and failing to meet the demand for filament melting during high-speed printing.

### SUMMARY

An objective of embodiments of the present invention lies in providing a melting assembly for melting a 3D printing filament, a guide member and a manufacturing method therefor, a guide assembly and a manufacturing method therefor, and a 3D printer. The present invention is capable of stripping an outer surface of the heated filament and directly heating an inner core of the filament, thereby increasing a heating rate of the filament.

In a first aspect, the present invention provides a melting assembly for melting a 3D printing filament, including a guide member, configured to guide the 3D printing filament that has been preheated to flow and configured to heat the 3D printing filament, where the guide member is provided with at least two first flow channels and one second flow channel, the first flow channels are arranged in a circumferential direction of the second flow channel, and a cross-sectional area of the second flow channel is smaller than a cross-sectional area of the first flow channel.

Two first flow channels are provided, cross-sections of the two first flow channels and a cross-section of the second flow channel lie in a same radial direction of the guide member, or three first flow channels are provided, the cross-sections of the three first flow channels and the cross-section of the second flow channel lie in the same radial direction of the guide member.

Optionally, all the first flow channels communicate with the second flow channel; or
the first flow channels and the second flow channel are arranged at intervals.

Optionally, the guide member is connected to a nozzle, and the guide member includes a heating section and a fusion section, the heating section being provided with the first flow channels and the second flow channel;
the fusion section being provided with a fusion flow channel, where the fusion flow channel communicates with the first flow channels and the second flow channel; and
the melting assembly further includes a heating member, where the heating member is disposed on an outer surface of the heating section and fixedly connected to the nozzle.

Optionally, the heating section includes a first body and a second body, where the first body is provided with the first flow channels and the second flow channel, the second body is provided with at least two third flow channels and one fourth flow channel, each of the third flow channels and the fourth flow channel has one end communicating with the first flow channels and the second flow channel, and the other end communicating with the fusion flow channel.

Optionally, axes of the third flow channels are set to be misaligned with axes of the first flow channels, and the second flow channel and the fourth flow channel are coaxially arranged.

Optionally, two adjacent third flow channels are provided with a stop portion, and the first body and the second body are provided with mutually cooperating positioning structures.

Optionally, one end of the guide member is provided with a mounting groove, and the melting assembly further includes a connecting block, where the connecting block is configured to connect to a heatbreak. The mounting groove is configured to receive the connecting block, and the connecting block is configured to transfer heat to the 3D printing filament in the heatbreak, so as to preheat the 3D printing filament.

In a second aspect, the present invention also proposes a guide member, including a body and a flow channel located within the body, where the flow channel includes a first region and a second region, a central axis of the body passes through the second region, and a cross-sectional area of the second region is smaller than a cross-sectional area of a filament.

Optionally, the flow channel includes at least two first flow channels, where the at least two first flow channels are arranged in an overlapping way, a circumscribed cylinder of an overlapping portion of the at least two first flow channels constitutes the second region, and portions of the at least two first flow channels outside the circumscribed cylinder constitute the first region.

Optionally, the flow channel includes at least two first flow channels and one second flow channel, the second flow channel being located at a center of the first flow channels, and the second flow channel independently constituting the second region.

Optionally, cross-sections of the first flow channels and/or a cross-section of the second flow channel is any one of a circular shape, a triangular shape, a square shape, a rectangular shape, a polygonal shape, an elliptical shape, or a closed shape enclosed by multiple arc-shaped sides.

Optionally, the cross-sections of the first flow channels and the second flow channel are circular, a ratio of a cross-sectional diameter of the first flow channel to that of the second flow channel is 5-0.5, and/or a ratio of the cross-sectional diameter of the second flow channel to that of the filament is 0.1-0.9.

Optionally, there are three first flow channels, the ratio of the cross-sectional diameter of the first flow channel to that of the second flow channel is 1:1, and/or the ratio of the cross-sectional diameter of the filament to that of the second flow channel is 2:1.

Optionally, the guide member is provided with an inlet at one end and is connected to a nozzle at the other end, the cross-sectional area of the second region decreases gradually or decreases stepwise from the inlet to the nozzle, and/or the cross-sectional area of the first region increases gradually or increases stepwise from the inlet to the nozzle.

In a third aspect, the present invention provides a guide assembly, including at least two guide members as mentioned above, the guide members being coaxial and connected end-to-end, the first regions of the guide members communicating with each other, and the second regions of the guide members communicating with each other.

Optionally, the guide assembly is provided with an inlet at one end and is connected to a nozzle at the other end, and a cross-sectional area of the second region of each guide member decreases gradually or decreases stepwise from the inlet to the nozzle.

Optionally, the guide assembly includes one first guide member and one second guide member. One end of the first guide member has an inlet, and the second guide member is connected to the nozzle. The first guide member includes at least two first flow channels and one second flow channel, the second flow channel being located at a center of the first flow channels, and the second flow channel forming the second region independently. The second guide member includes at least two first flow channels, where the at least two first flow channels are arranged in an overlapping way, a circumscribed cylinder of an overlapping portion of the at least two first flow channels constitutes the second region, and portions of the at least two first flow channels outside the circumscribed cylinder constitute the first region.

Optionally, the first regions of the at least two guide members communicate with each other and are not coaxial.

Optionally, the inlet includes a conical portion.

In a third aspect, the present invention also proposes a 3D printer, including any one of the above-described melting assembly for melting the 3D printing filament, the above-described guide member, and the above-described guide assembly; and
a heatbreak, where the heatbreak is connected to an inlet of the guide member via a connecting block, the heatbreak is configured to deliver the filament into the guide member, and the connecting block is configured to transfer heat to the 3D printing filament in the heatbreak, so as to preheat the 3D printing filament.

In a fourth aspect, the present invention also proposes a manufacturing method for the guide member, including:
preparing a first region on a body, where the first region penetrates the body, and the first region is configured to allow an outer surface portion of a filament to pass through;
preparing a second region on the body, where the second region penetrates the body, a central axis of the body passes through the second region, and the second region is configured to allow a core of the filament to pass through.

Optionally, a heatbreak is connected to one end of the body; and a nozzle is connected to the other end of the body.

Optionally, the preparing the first region on the body and the preparing the second region on the body includes:
preparing at least two first flow channels on a columnar body, where the at least two first flow channels overlap, a circumscribed cylinder of an overlapping portion of the at least two first flow channels constitutes the second region, and portions of the at least two first flow channels outside the circumscribed cylinder constitute the first region; or
preparing at least two non-overlapping first flow channels on the columnar body; preparing one second flow channel between the at least two first flow channels, the second flow channel forming the second region independently, and regions of the at least two first flow channels excluding the second flow channel constituting the first region.

In a fifth aspect, the present invention also proposes a manufacturing method for a guide assembly, including:
preparing at least two first flow channels on a body, the at least two first flow channels axially penetrating the body; and
preparing one second flow channel at a center of the at least two first flow channels at one end of the body, a length of the second flow channel being less than that of the first flow channels.

Optionally, the method further includes preparing one fourth flow channel at the center of the at least two first flow channels at the other end of the body.

The fourth flow channel communicates with the second flow channel, and a cross-sectional area of the fourth flow channel is less than a cross-sectional area of the second flow channel.

Optionally, cross-sections of the second flow channel and the fourth flow channel are circular, and a ratio of a cross-sectional diameter of the fourth flow channel to that of the second flow channel is 0.1-0.9.

Optionally, the first through hole, the third through hole, and the fourth through hole are prepared on the column of the guide assembly by drilling.

The technical solutions of the present invention have the following effects:
by providing at least two first flow channels and one second flow channel in the guide member, with the multiple first flow channels arranged in the circumferential direction of the second flow channel, and the cross-sectional area of the second flow channel being smaller than the cross-sectional area of the filament, the second flow channel can exert a stripping effect on the outer surface of the filament, allowing the preheated outer surface of the filament to flow into the first flow channels. The inner core of the filament has a smaller radial dimension, so the inner core flows directly into the second flow channel, achieving independent heating of the inner core. This reduces the influence of material on the outer surface of the filament on the heating of the inner core, improving the heating effect of the guide member on the filament. Because the volume of the preheated outer surface of the filament is larger than the volume of the inner core, and the cross-sectional area of the second flow channel is smaller than that of the first flow channel, the softened outer surface of the preheated filament can flow as much as possible into the first flow channels, reducing the resistance for the stripped outer surface to pass through the first flow channels. Only the unsoftened inner core enters the second flow channel, shortening a heating distance for the inner core, achieving faster heating of the inner core, improving heating efficiency of the filament, and further increasing overall melting rate of the filament.

### BRIEF DESCRIPTION OF THE DRAWINGS

To more clearly illustrate the technical solutions of the embodiments of the present invention, the drawings used in the embodiments of the present invention will be briefly described below. It should be understood that the following drawings only show some embodiments of the present invention and should not be considered as a limitation of the scope. For those originally skilled in the art, other related drawings could also be obtained based on these drawings without creative effort.
FIG. 1 is a schematic structural diagram of a melting assembly for melting a 3D printing filament provided in an embodiment of the present invention;
FIG. 2 is an exploded schematic structural diagram of a melting assembly for melting a 3D printing filament provided in an embodiment of the present invention;
FIG. 3 is a front view of a melting assembly for melting a 3D printing filament provided in an embodiment of the present invention;
FIG. 4 is a cross-sectional schematic structural diagram along line A-A in FIG. 3;
FIG. 5 is a schematic structural diagram of flow channels of a guide member provided in an embodiment of the present invention;
FIG. 6 is a schematic structural diagram of flow channels of a guide member provided in an embodiment of the present invention;
FIG. 7 is a schematic structural diagram of flow channels of a guide member provided in an embodiment of the present invention;
FIG. 8 is a front view of a melting assembly for melting a 3D printing filament provided in an embodiment of the present invention;
FIG. 9 is a cross-sectional schematic structural diagram along line A-A in FIG. 8;
FIG. 10 is a cross-sectional schematic structural diagram along line E-E in FIG. 8;
FIG. 11 is a cross-sectional schematic structural diagram along line H-H in FIG. 8;
FIG. 12 is an exploded schematic structural diagram of a melting assembly for melting a 3D printing filament provided in an embodiment of the present invention;
FIG. 13 is an exploded schematic structural diagram of a melting assembly for melting a 3D printing filament provided in an embodiment of the present invention from another perspective;
FIG. 14 is a front view of schematic structural diagram of a melting assembly for melting a 3D printing filament provided in an embodiment of the present invention;
FIG. 15 is a cross-sectional schematic structural diagram along line A-A in FIG. 14;
FIG. 16 is a front view of schematic structural diagram of a melting assembly for melting a 3D printing filament provided in an embodiment of the present invention;
FIG. 17 is a cross-sectional schematic structural diagram along line F-F in FIG. 16;
FIG. 18 is a cross-sectional schematic structural diagram along line E-E in FIG. 16;
FIG. 19 is a cross-sectional schematic structural diagram along line H-H in FIG. 16;
FIG. 20 is a structural schematic diagram of a 3D printer effector provided in an embodiment of the present invention;
FIG. 21 is a structural schematic diagram of the 3D printer effector provided in an embodiment of the present invention from different perspectives;
FIG. 22 is a partial cross-sectional structural schematic diagram of the 3D printer effector provided in an embodiment of the present invention;
FIG. 23 is a cross-sectional schematic diagram of a guide member provided in an embodiment of the present invention; and
FIG. 24 is a cross-sectional structural schematic diagram of a melting assembly for melting a 3D printing filament provided in an embodiment of the present invention.

Reference signs: 1-guide member; 01-first guide member; 02-second guide member; 11, 12-guide member body; 111-first flow channel; 112-second flow channel; 113-third flow channel; 114-fourth flow channel; 115, 61-fusion flow channel; 116, 21-first body; protrusion-201; 117, 22-second body; 1161-positioning groove; 1171-positioning protrusion; 101-first region; 102-second region; 1021-circumscribed circle; 2-heating member; 3-connecting block; 301-inlet; 302-conical portion; 4-heatbreak; 5-fixing block; 6-nozzle; 7-nozzle mounting portion; 8-hanging platform; 9-upper guide sleeve; 10-guide tube; 13-filament feeding wheel; 14-heat sink; 15-cooling ventilator; 16-motor; 17-filament feeding groove; 18-leveling module; 19-cooling fan; 20-stop portion; 23-extruder.

### DETAILED DESCRIPTION OF THE EMBODIMENTS

The technical solutions of the embodiments of the present invention will now be described with reference to the drawings in the embodiments of the present invention.

It should be noted that similar reference numerals and letters in the following drawings indicate similar items. Therefore, once an item is defined in one drawing, it does not need to be further defined or explained in subsequent drawings. Furthermore, in the description of the present invention, terms such as "first" and "second" are used only to distinguish descriptions and should not be construed as indicating or implying relative importance.

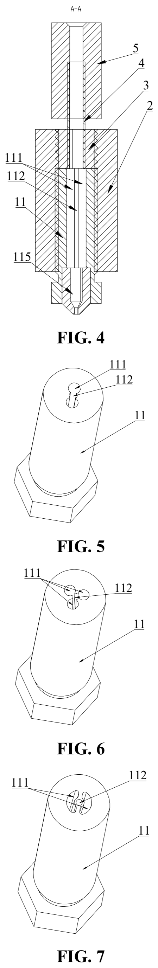

In a first aspect, as shown in FIGS. 5-7 and 23, the present invention proposes a guide member 1. The guide member 1 includes a body and a flow channel located within the body. The flow channel includes a first region 101 and a second region 102. A central axis of the body passes through the second region 102, and a cross-sectional area of the second region 102 is smaller than a cross-sectional area of a filament. The second region 102 is configured to allow an inner core portion of the filament to pass through, and the first region 101 is configured to allow a softened outer surface portion of the filament to pass through. A cross-section of the first region 101 is inconsistent with a cross-section of the outer surface portion of the filament, and the softened outer surface portion of the filament is deformed when entering the first region 101.

Understandably, the guide member 1 can guide the preheated filament to flow within the guide member 1. Since the cross-sectional area of the second region 102 is smaller than that of the filament, as the preheated filament passes through the second region 102, at least a part of an outer periphery of the filament is stripped. The stripped filament passes through the first region 101 and is heated and melted, while the core of the filament continues to be heated and melted within the second region 102. This arrangement reduces a distance between the core of the filament and an inner wall of the flow channel, thus reducing a thermal conduction distance of the core of the filament and reducing a distance from a central axis of the filament to the inner wall of the flow channel. This enables the entire filament to be heated and melted quickly and uniformly, increasing the amount of filament melted per unit time and the uniformity of melting. It can prevent insufficient melting of the core of the filament from affecting the discharging and printing quality.

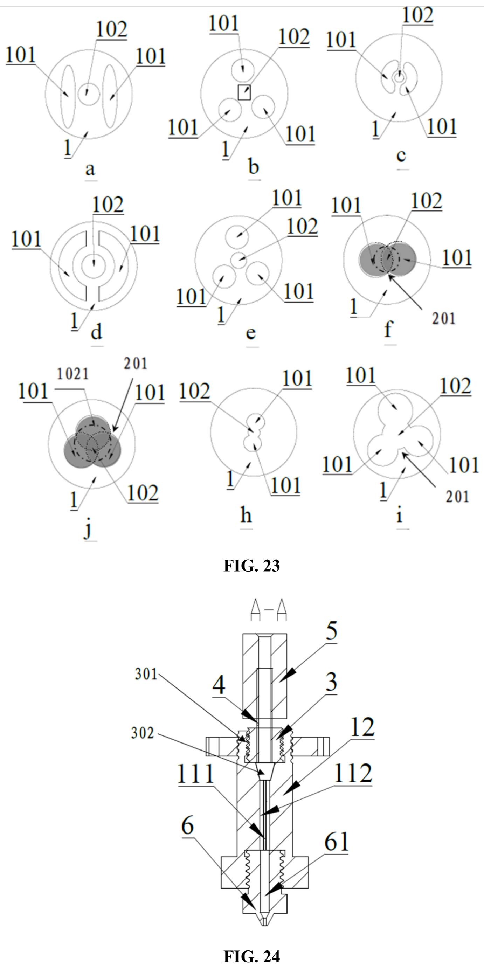

As an embodiment, as shown in f and j in FIG. 23, the flow channel includes at least two first flow channels 111, where the at least two first flow channels 111 are arranged in an overlapping way. A circumscribed circle 1021 of an overlapping portion of the at least two first flow channels 111 partially constitutes the second region 102, and the remaining portions of the at least two first flow channels 111 constitute the first region 101.

It can be understood that, referring to f in FIG. 23, with the central axis of the body as a base point, two through holes are prepared as first flow channels 111, equidistantly on two sides of the base point, and the at least two first flow channels 111 overlap. The circumscribed circle 1021 of the overlapping portion of the at least two first flow channels 111 has a diameter smaller than a cross-sectional diameter of the filament and an area smaller than the cross-sectional area of the filament, allowing the inner core portion of the filament to pass through. The remaining portions of the at least two first flow channels 111, excluding the circumscribed circle 1021, allow the softened outer surface of the filament to pass through. At least two first flow channels 111 form a protrusion 201 at their overlapping intersection point, where the protrusion is sharp and can strip a part of the softened outer surface of the filament as the filament passes through.

As an embodiment, referring to a-e in FIG. 23, the flow channel includes at least two first flow channels 111 and one second flow channel 112. Each flow channel is independently arranged and does not overlap with the others. The second flow channel 112 independently forms the second region 102, allowing the inner core portion of the filament to pass through. The at least two first flow channels 111 independently form the first region 101, allowing the softened outer surface of the filament to pass through.

As an embodiment, referring to h-i in FIG. 23, the flow channel includes at least two first flow channels 111 and one second flow channel 112. The first flow channels 111 do not overlap, but partially overlap with the second flow channel 112. The second flow channel 112 independently constitutes the second region 102, allowing the inner core portion of the filament to pass through. The non-overlapping portions of the at least two first flow channels 111 and the second flow channel 112 constitute the first region 101, allowing the softened outer surface of the filament to pass through.

In the present embodiment, further, a ratio of the cross-sectional area of the second flow channel 112 to that of the filament (cross-sectional area of the second flow channel 112 ÷ cross-sectional area of the filament) is 0.05-0.5, optionally 0.1, 0.2, 0.3, or 0.4. A ratio of the cross-sectional area of the first flow channel 111 to that of the second flow channel 112 (cross-sectional area of the first flow channel 111 ÷ cross-sectional area of the second flow channel 112) is 25-0.25, optionally 20, 15, 10, 5, 1, or 0.5.

As an embodiment, as shown in FIG. 6 and i in FIG. 23, the filament is a filament with a circular cross-section, the flow channels are circular bores, and three first flow channels 111 are provided, surrounding the second flow channel 112 and slightly overlapping with the second flow channel 112.

Furthermore, a ratio of a diameter of the second flow channel 112 to that of the filament (cross-sectional diameter of the second flow channel 112 ÷ cross-sectional diameter of the filament) is 0.1-0.9, optionally 0.2, 0.3, 0.4, 0.5, 0.6, 0.7, or 0.8. The diameter of the second flow channel 112 is 0.1-1.7 mm, optionally 0.2, 0.5, 0.8, 1.0, 1.2, or 1.5 mm. The diameter of the first flow channel 111 is 0.5-1.5 mm, optionally 0.8, 1.0, 1.2, or 1.5 mm. The ratio of the cross-sectional diameter of the first flow channel 111 to that of the second flow channel 112 (cross-sectional area of the second flow channel 112 ÷ cross-sectional area of the filament) is 5-0.5, optionally 4, 3, 2, 1, or 0.8.

Furthermore, a cross-sectional area of a region enclosed by the first flow channels 111 and the second flow channel 112 is preferably greater than or equal to the cross-sectional area of the filament. This can reduce the resistance when the filament enters the region enclosed by the first flow channels 111 and the second flow channel 112.

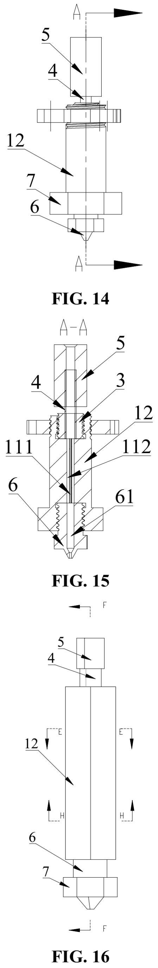

**Table 1 Comparative Examples of Structures Shown in FIG. 15**

| Serial Number | Cross-sectional Area of Filament (mm²) | Total Flow Channel Area (mm²) | Ratio of Cross-sectional Area of Second Flow Channel to that of Filament | Ratio of Diameter of Second Flow Channel to that of Filament | Ratio of Cross-sectional Area of First Flow Channel to that of Second Flow Channel | Ratio of Cross-sectional Diameter of First Flow Channel to that of Second Flow Channel | Diameter of First Flow Channel (mm) | Diameter of Second Flow Channel (mm) | Outlet Temperature (K) | Inlet Pressure (MPa) | Thermal Conduction Distance for Filament Mandrel (mm) |
|---|---|---|---|---|---|---|---|---|---|---|---|
| 1-1 | 2.40 | 2.29 | 0.05 | 0.11 | 25 | 5 | 1 | 0.2 | 403K | 85.94 | 0.10 |
| 1-2 | 2.40 | 2.37 | 0.08 | 0.29 | 4 | 2 | 1 | 0.5 | 403K | 84.5 | 0.25 |
| 1-3 | 2.40 | 2.67 | 0.21 | 0.46 | 1.56 | 1.25 | 1 | 0.8 | 377K | 80.0 | 0.40 |
| 1-4 | 2.40 | 2.96 | 0.33 | 0.57 | 1 | 1 | 1 | 1 | 363K | 77.7 | 0.50 |
| 1-5 | 2.40 | 3.12 | 0.40 | 0.63 | 0.83 | 0.91 | 1 | 1.1 | 325K | 75.6 | 0.51 |

Herein, the thermal conduction distance for filament mandrel is the distance from the axis of the filament to the nearest inner wall of flow channels.

With reference to Table 1, Table 1 provides examples of specific values of the cross-sectional radius of the first flow channel 111 and the cross-sectional radius of the second flow channel 112, as well as the ratio of the two. Herein, a higher outlet temperature indicates greater heating efficiency for the filament. The magnitude of the inlet pressure characterizes the resistance and ease with which the filament is pushed into the flow channels by external force. Higher pressure indicates greater resistance for the filament at an inlet 301 of the flow channel, affecting the pushing speed and consequently the amount of the filament heated and melted per unit time.

Understandably, the smaller the cross-sectional radius of the second flow channel 112, the shorter the thermal conduction distance between the core of the filament and a guide member body 11, and consequently, the faster the core of the filament is heated. Furthermore, due to the fact that after the body is heated, the heat thereof needs to be gradually conducted from an inner wall of the body to the filament mandrel, a portion of the filament closer to the axis is heated more slowly and has higher hardness. The closer a channel sidewall of the guide member body 11 is to the core of the filament, the greater the pushing resistance when the filament enters the flow channels of the guide member 1, and the greater the inlet pushing force required for the filament.

Understandably, when the preheated filament passes through the second flow channel 112 and the first flow channels 111, one second flow channel 112 and three first flow channels 111 combine to strip the melted portion of the outer periphery of the filament, so that the softened portion of the outer periphery of the filament enters the first flow channels 111, and the core portion of the filament enters the second flow channel 112 for heating. In Table 1, the ratio of 2:1 of the diameter of the first flow channel 111 to that of the second flow channel 112 is employed for Serial Number 1-2 and the ratio of 5:1 for Serial Number 1-1, and both have the same outlet temperature, meaning this ratio offers similar heating and melting effects for the filament. However, the inlet pressure of Serial Number 1-2 is lower than that of Serial Number 1-1, meaning the resistance experienced by the filament at the channel inlet 301 in Serial Number 1-2 is less than that in Serial Number 1-1. Therefore, the ratio of 2:1 employed in Serial Number 1-2 allows for better control of the pushing resistance of the filament while melting the filament at high rate. Thus, the ratio of 2:1 is preferred for the cross-sectional radius of the first flow channel 111 to that of the second flow channel 112.

It can be understood that, based on the above comparison, when the first flow channels 111 and the second flow channel 112 adopt the ratio of Serial Number 1-2, the second flow channel 112 can strip the softened portion of the outer periphery of the filament, allowing the harder portion of the core of the filament to enter the second flow channel 112 without obstruction. Moreover, it can push more of the preheated and softened outer periphery of the filament into the first flow channels 111, increasing the contact area between the filament and the first flow channels 111 and improving the heating efficiency.

In the present embodiment, the second region 102 is the second flow channel 112. The ratio of the radius of the second flow channel 112 to that of the filament is selected as 1:2, resulting in their cross-sectional area ratio of 1:4. Understandably, when the preheated filament enters the second flow channel 112 and the first flow channels 111, the combination of the second flow channel 112 and the first flow channels 111 strips the outer periphery portion, which accounts for three-quarters of the volume of the filament. The stripped portion enters the three first flow channels 111; the core portion, accounting for one-quarter of the volume of the filament, enters the second flow channel 112 for the next melting step. Preferably, the radius of the first flow channel 111 is the same or larger than that of the second flow channel 112, resulting in relatively low resistance when the stripped portion enters the three first flow channels 111. When the core of the filament enters the second flow channel 112 for heating, the radius ratio of 1:2 employed for the second flow channel 112 and the filament can reduce the hindrance to the heating of the core of the filament caused by the melted portion of the outer periphery of the filament, improve the heating effect of the second flow channel 112 on the core of the filament, and increase the overall melting rate of the filament.

In the present embodiment, referring to c-d in FIG. 23, the cross-section of the first flow channel 111 or the second flow channel 112 is a closed shape enclosed by multiple arc-shaped sides. It can be understood that the cross-section of the first flow channel 111 and/or the second flow channel 112 is an irregular shape, and adopting this shape can increase the contact area between the guide member 1 and the filament, thus improving heating efficiency. Herein, as shown in FIG. 5, when there are two first flow channels 111, the cross-section of the first flow channels 111 includes two first arc-shaped sides, the cross-section of the second flow channel 112 includes two second arc-shaped sides, and the two first arc-shaped sides and the two second arc-shaped sides are connected to form a closed shape enclosed by multiple arc-shaped sides. Herein, as shown in FIG. 6 and h in FIG. 23, when there are three first flow channels 111, the cross-section of the first flow channels 111 includes three first arc-shaped sides, the cross-section of the second flow channel 112 includes three second arc-shaped sides, and the three first arc-shaped sides and the two third arc-shaped sides are connected to form a closed shape enclosed by multiple arc-shaped sides. Herein, as shown in FIG. 7 and c in FIG. 23, the cross-section of the second flow channel 112 is a circular shape, while the cross-section of the first flow channel 111 is a closed shape enclosed by multiple arc-shaped sides. Of course, in an optional embodiment, referring to FIG. 23, the cross-section of either the first flow channel 111 or the second flow channel 112 can be one of a circular shape, a triangular shape, a square shape, a rectangular shape, a polygonal shape, and an elliptical shape.

Furthermore, the guide member 1 is provided with the inlet 301 at an upper end and is connected to a nozzle 6 at the other end. The cross-sectional area of the second region 102 decreases gradually or decreases stepwise from the inlet 301 to the nozzle 6. The cross-sectional area of the first region 101 increases gradually or increases stepwise from the inlet 301 to the nozzle 6.

It can be understood that the gradual decrease or stepwise decrease of the cross-sectional area of the second region 102 allows for multi-stage stripping and sub-outer layer stripping of the filament. The gradual decrease or stepwise decrease of the cross-sectional area of the first region 101 can increase the passage space for the stripped melted portion of the outer periphery of the filament, reducing passing channel resistance to the melted portion of the outer periphery.

Furthermore, referring to FIG. 24, a conical portion 302 is further provided below the inlet 301 of the guide member 1. The conical portion 302 is a channel with a tapered diameter. It can be understood that an outer surface of the guide member 1 is provided with a heating portion 2, and the conical portion 302 can preheat the filament entering the inlet 301 of the guide member 1, promoting the heating and softening of the outer surface of the filament, and preventing insufficient softening and excessive hardness of the outer surface of the filament, which would cause rigid contact with the protrusion 201 and hinder its advancement when entering the first flow channels and the second flow channel 112.

In a second aspect, the present invention also proposes a guide assembly, including at least two guide members 1 as described in the above embodiments. The guide members 1 are coaxial and connected end-to-end. The first regions 101 of each of the guide members 1 communicate with each other, and the second regions 102 of each of the guide members 1 communicate with each other.

Understandably, the guide member 1 can guide the preheated filament to flow within the guide member 1. The at least two coaxial guide members 1 connected end-to-end have progressively decreasing cross-sectional areas in their second regions 102, allowing for sequential stripping of the outer layer of the filament. This arrangement enables the entire filament to be heated and melted more quickly and uniformly, thus increasing the amount of filament melted per unit time and the uniformity of melting, and reducing the impact of insufficient melting of the core of the filament on feeding and discharging. Moreover, the guide assembly is also easy to assemble and process.

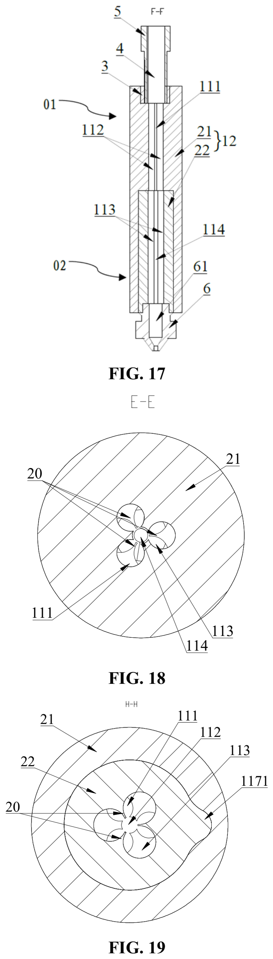

As an embodiment, referring to FIGS. 17-19, there are two guide members 1. The two guide members 1 include a first guide member 01 and a second guide member 02. An upper end of the first guide member 01 has an inlet 301, and a lower end of the second guide member 02 is connected to a nozzle 6. The first guide member 01 is provided with a first flow channel 111 and a second flow channel 112. The second guide member 02 is provided with at least two third flow channels 113 and one fourth flow channel 114. The fourth flow channel 114 and the second flow channel 112 each independently constitute the second region 102. The non-overlapping portions of the third flow channels 113 and the fourth flow channel 114, and the non-overlapping portions of the first flow channel 111 and the second flow channel 112, each independently constitute a first region 101. The third flow channels 113 and the fourth flow channel 114 communicate with each other. The third flow channels 113 and the fourth flow channel 114 each have one end communicating with the first flow channel 111 and the second flow channel 112, and the other end communicating with a fusion flow channel 61, thus enabling the filament in the first flow channel 111 and the second flow channel 112 to enter the third flow channels 113 and the fourth flow channel 114 for further heating, and then be extruded through the nozzle 6 via the fusion flow channel 61. A cross-sectional area of the fourth flow channel 114 is smaller than that of the second flow channel 112. In the present embodiment, the cross-section of each flow channel is circular, meaning a cross-sectional diameter of the fourth flow channel 114 is smaller than that of the second flow channel 112. Therefore, when the inner core portion of the filament enters the fourth flow channel 114 from the second flow channel 112, a sub-outer layer of the filament can be stripped away, accelerating the heating of the portion of the filament close to the mandrel and improving the heating efficiency of the filament. Of course, in other embodiments, the guide member 1 is not limited to two; it can also be three, four, etc.

In the present embodiment, furthermore, a ratio of the cross-sectional area of the fourth flow channel 114 to that of the second flow channel 112 is 0.05-0.95, optionally 0.1, 0.3, 0.5, or 0.8.

As an embodiment, as shown in FIGS. 17-19 and i in FIG. 23, a filament with a circular cross-section is employed as the filament, and the flow channels are circular bores. Three first flow channels 111 are provided, surrounding the second flow channel 112 and slightly overlapping with the second flow channel 112.

Furthermore, the diameter of the second flow channel 112 is 0.5-1.5 mm, optionally 0.8, 1.0, 1.1, 1.2, 1.3, or 1.4 mm. The diameter of the fourth flow channel 114 is 0.2-1.4 mm, optionally 0.4, 0.6, 0.8, 1.0, or 1.2 mm. The ratio of the cross-sectional diameter of the fourth flow channel 114 to that of the second flow channel 112 (cross-sectional area of the second flow channel 112 ÷ cross-sectional area of the filament) is 0.1-0.9, optionally 0.3, 0.4, 0.6, or 0.8.

Furthermore, a cross-sectional area of a region enclosed by the third flow channels 113 and the fourth flow channel 114 is preferably greater than or equal to the cross-sectional area of the filament. This can reduce the resistance to the filament when entering the region enclosed by the third flow channels 113 and the fourth flow channel 114 from a region enclosed by the first flow channel 111 and the second flow channel 112.

**Table 2 Comparative Examples of Structures Shown in FIG. 17**

| Serial Number | Diameter of Second Flow Channel (mm) | Diameter of Fourth Flow Channel (mm) | Ratio of Diameter of Second Flow Channel to that of Filament | Ratio of Diameter of Fourth Flow Channel to that of Second Flow Channel | Ratio of Area of Fourth Flow Channel to that of Second Flow Channel | Outlet Temperature (K) | Inlet Pressure (MPa) | Thermal Contact Area (mm²) | Thermal Conduction Distance for Filament Mandrel (mm) |
|---|---|---|---|---|---|---|---|---|---|
| 2-1 | 1.5 | 0.4 | 0.86 | 0.27 | 0.07 | 388 | 81.90 | 171.31 | 0.20 |
| 2-2 | 1.5 | 0.5 | 0.86 | 0.33 | 0.11 | 385 | 80.73 | 164.82 | 0.25 |
| 2-3 | 1.5 | 1 | 0.86 | 0.67 | 0.45 | 354 | 76.40 | 148.34 | 0.50 |
| 2-4 | 1.5 | 1.5 | 0.86 | 1.00 | 1 | 346 | 74.70 | 140.80 | 0.75 |
| 1-5 | none | 1.1 | / | / | / | 325 | 75.60 | 125.66 | 0.51 |

It can be understood that the cross-sectional diameter of the second region 102 of the second guide member 02 is smaller than that of the second region 102 of the first guide member 01; that is, the cross-sectional area of the second region 102 of the second guide member 02 is smaller than that of the second region 102 of the first guide member 01. The resulting cross-sectional area of the second region 102 decreases gradually or decreases stepwise, allowing for sub-outer layer stripping of the filament. When the melted portion of the outer periphery of the filament is stripped and enters the first region 101 of the second guide member 02 from the first region 101 of the first guide member 01, since the first regions 101 of the two guide members 1 are not coaxial, a disturbance or stirring effect is achieved on the melted portion of the outer periphery of the filament, so that the outer periphery portion of the filament is heated evenly.

Furthermore, the inlet 301 of the guide assembly may also include a conical portion 302 (not shown in the figure), where the conical portion 302 is configured to preheat the filament, so that the outer layer of the filament is softened and easily stripped away. A longer conical portion 302 superimposed with a small-diameter inner hole helps reduce the pressure at the inlet 301. The length of the conical portion 302 accounts for 1/10 to 1/2, preferably 1/5, of the overall length of the guide member 1.

Furthermore, in the present embodiment, the first guide member 01 and the second guide member 02 of the guide assembly are threadedly connected. However, this is not limited to a threaded connection; welding or other conventional connection methods in the art are also possible. The first guide member 01 and the second guide member 02 of the guide assembly can be separate structures or an integral structure.

The present invention also proposes a manufacturing method for a 3D printing filament melting assembly using the above-described guide member 1 or guide assembly, including steps as follows.

S1: forming flow channels on a columnar body for a softened outer surface portion and a core of the filament to pass through, thereby obtaining the guide member 1. The body is not limited to a columnar shape; other shapes capable of forming the flow channels are also possible. The columnar body is made of a material that conducts heat easily, which is not limited to or contains copper, steel, aluminum, or other similar components.

As an embodiment, referring to FIGS. 6, 15, 23i, and 24, following steps are specifically included.

S11: providing a cylindrical columnar body, and preparing three independent through holes penetrating the columnar body in a centrally symmetrical manner by drilling at one end of the cylinder, forming three first flow channels 111, where cross-sections of the through holes are circular;

S12: in the middle of the three independent first flow channels 111, i.e., at a central axis of the cylindrical columnar body, preparing one through hole penetrating the columnar body by drilling, forming one second flow channel 112, where a cross-section of the through hole is circular, with a diameter smaller than a sectional diameter of the filament, and the first flow channels 111 each overlap slightly with the second flow channel 112.

It can be understood that protrusions 201 formed by the overlap of the first flow channels 111 and the second flow channel 112 strip the outer surface portion of the filament when the filament passes through. Three first flow channels 111 are configured to allow the softened outer surface of the filament to pass through, and one second flow channel 112 is configured to allow the unsoftened inner core portion of the filament to pass through. All first flow channels 111 communicate with the second flow channel 112, thereby increasing the flowability of the filament, allowing more of the preheated outer surface of the filament to flow into the first flow channels 111, increasing the contact area between the filament and the first flow channels 111, and improving heating efficiency.

Furthermore, the first flow channels 111 and the second flow channel 112 are not limited to overlapping. It can be understood that when the through holes prepared in step S1 and the through hole prepared in step S2 are arranged separately, the second flow channel 112 independently constitutes the second region 102, and the two first flow channels 111 independently constitute the first region 101. Herein, the two first flow channels 111 do not communicate with the second flow channel 112; therefore, an inner wall area of the first flow channels 111 and the second flow channel 112 is larger than that when they communicate, thereby increasing the contact area between the filament and the first flow channels 111 and the second channel 112, and improving heating efficiency.

As an embodiment, referring to f and j in FIG. 23, it specifically includes:
S11': providing a cylindrical columnar body, and preparing three through holes penetrating the columnar body in a centrally symmetrical manner by drilling at one end of the cylinder, forming three first flow channels 111, where the three through holes overlap with each other, and a diameter of a circumscribed circle 1021 at intersection points of their cross-sections is smaller than a cross-sectional diameter of the filament, thus obtaining the guide member 1.

It can be understood that in the guide member 1 of the present embodiment, when the filament passes through, an internal region enclosed by the intersection points of the cross-sections, i.e., the region of the circumscribed circle 1021 at the intersection points, is configured to allow the inner core portion of the filament that has not yet been softened to pass through. A body region at the intersection points of the cross-sections can strip the softened outer surface portion of the filament. Through-hole regions outside the circumscribed circle 1021 can allow the softened outer surface portion of the filament to pass through.

Furthermore, the number of through holes is not limited to three; it can also be two, four, etc., optionally from 2 to 8. In the present embodiment, since the mutual overlapping region of the three through holes already hollows out the region through which the axis of the columnar body passes, it already forms a flow channel for the unsoftened inner core portion of the filament to pass through, and will not hinder the passage of the unsoftened inner core portion of the filament. Therefore, it is unnecessary to prepare a separate flow channel for the inner core portion of the filament to pass through. Moreover, the sharp intersection points of the cross-sections facilitate the splitting and stripping of the softened outer surface portion of the filament.

Furthermore, it further includes:
at one end of the columnar body obtained in S11', at the central axis of the cylindrical columnar body, preparing a through hole that does not penetrate the columnar body by drilling, forming a second flow channel 112, where a diameter of this through hole is smaller than the sectional diameter of the filament, but larger than the diameter of the circumscribed circle 1021 at the intersection points of the cross-sections of the three first flow channels 111. This is equivalent to expanding the diameter of the region formed by the circumscribed circle 1021 of intersection lines of the three first flow channels 111, thus obtaining the guide assembly.

In the guide assembly of the present embodiment, as the filament passes through, the filament is heated by the body and the outer surface of the filament is softened. The unsoftened inner core portion of the filament first passes through the second flow channel 112. Because the diameter of the second flow channel 112 is smaller than the diameter of the filament, the softened outer surface portion of the filament can be stripped away once. Then, the inner core portion of the filament enters the channel formed by the overlapping portion of the first channels from the second channel, specifically the region formed by the circumscribed circle 1021 of the intersection lines of the three first flow channels 111. Since the diameter of the circumscribed circle 1021 at the intersection points of their cross-sections is smaller than the diameter of the fourth flow channel 114, when the inner core portion of the filament, which has been softened to a certain extent, in the fourth flow channel 114 enters, the softened portion thereof is further stripped away. The diameter of the remaining unsoftened inner core portion further decreases, and it directly contacts the region of the intersection lines of the three first flow channels 111, that is, a thermal conduction distance of the core of the filament is further reduced, enabling the unsoftened inner core portion of the filament to quickly soften and then melt upon heating.

In the present embodiment, as the filament passes through the guide member 1, it is continuously heated, causing the cross-sectional diameter of its rigid inner core portion to gradually decrease. The diameter of the flow channel through which the inner core portion passes, from the second flow channel 112 to the overlapping portion of the first flow channels 111, also adaptively decreases. This can reduce the possibility of rigid contact between the unsoftened rigid inner core portion of the filament and the inlet 301 of the flow channel, thereby reducing the resistance when the filament is pushed into the guide member 1 and facilitating rapid passage and heat-induced melting of the filament within the guide member 1. In the present embodiment, only four drilling operations are required on the same body to construct two-stage guide flow channels, resulting in a simple process and high processing efficiency.

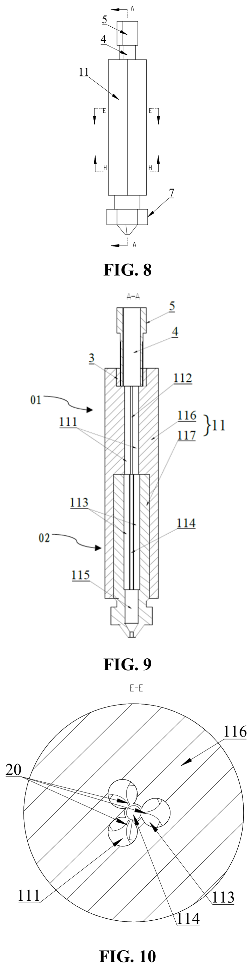

As an embodiment, referring to FIGS. 9 and 17-19, it specifically includes:
S11: providing a cylindrical columnar body as a first body, and preparing three independent through holes penetrating the columnar body in a centrally symmetrical manner by drilling at one end of the cylinder, forming three first flow channels 111, where the cross-sections of the through holes are circular;
S12: in the middle of the three independent first flow channels 111, i.e., at the central axis of the cylindrical columnar body, preparing one through hole penetrating the columnar body by drilling, forming one second flow channel 112, where the cross-section of the through hole is circular, with a diameter smaller than the sectional diameter of the filament, and the first flow channels 111 each overlap slightly with the second flow channel 112, obtaining the first guide member 01;
S13: providing another cylindrical columnar body as a second body, preparing three independent through holes penetrating the columnar body in a centrally symmetrical manner by drilling at one end of the cylinder, forming three third flow channels 113, where the through holes have the same cross-sectional shape and specification as the first flow channel 111;
S14: in the middle of the three independent third flow channels 113, i.e., at the central axis of the cylindrical columnar body, preparing one through hole penetrating the columnar body by drilling, forming one fourth flow channel 114, where the cross-section of the through hole is circular, with a diameter smaller than the sectional diameter of the second flow channel 112 and also smaller than the sectional diameter of the filament, and the third flow channels 113 each overlap slightly with the fourth flow channel 114, obtaining the second guide member 02; and
S15: assembling the first guide member 01 onto the second guide member 02 via a threaded connection to obtain the guide assembly. The assembly method is not limited to the threaded connection; welding or other conventional connection methods in the art can also be used.

In the guide member 1 of the present embodiment, as the filament passes through, the filament is heated by the body and the outer surface of the filament is softened. The unsoftened inner core portion of the filament first passes through the second flow channel 112. Because the diameter of the second flow channel 112 is smaller than the diameter of the filament, the softened outer surface portion, i.e., outer layer, of the filament can be stripped away once. Then, the inner core portion of the filament enters the fourth flow channel 114 from the second channel. Since the diameter of the fourth flow channel 114 is smaller than the diameter of the second flow channel 112, when the inner core portion of the filament, which has been softened to a certain extent, in the second flow channel 112 enters, the softened portion thereof is further stripped away. In other words, the sub-outer layer of the filament is stripped away. The diameter of the remaining unsoftened inner core portion further decreases, and it directly contacts a side wall of the fourth flow channel 114. In other words, the thermal conduction distance of the core of the filament is further reduced, allowing the unsoftened inner core portion of the filament to be quickly softened and then melted upon heating.

Furthermore, the diameter of the third flow channel 113 is not limited to being the same as the diameter of the first flow channel 111; the diameter of the third flow channel 113 can also be larger than the diameter of the first flow channel 111. In this case, because the cross-sectional area of the flow channel through which the softened outer surface of the filament passes increases, it helps reduce the resistance and pressure required to push the filament from the first guide member 01 into the second guide member 02.

Furthermore, d3 ≤ 0.5d1, where d3 is the length of the third through hole, and d1 is the length of the first through hole.

The above-mentioned manufacturing method for the 3D printing filament melting assembly further includes:
S2: forming an inlet 301 with internal threads at an upper end of the guide member 1 or guide assembly to facilitate connection to a heatbreak 4 via a connector 3; and
S3: forming a nozzle interface with threads at a lower end of the guide member 1 or guide assembly to facilitate connection to the nozzle 6.

Furthermore, it also includes S4: preparing a conical portion 302 below the inlet 301 of the columnar body obtained in step S2 by drilling, where the conical portion 302 is a channel with a tapered diameter.

Furthermore, the cross-section of the through hole is not limited to a circular shape; it can also be other centrally symmetrical regular or irregular shapes.

Furthermore, the columnar body is not limited to a cylinder; it can also be a regular polyhedron, cuboid, elliptical cylinder, or other prisms. The number of through holes constituting the first flow channels 111 is not limited to three; it can also be two, four, etc., optionally from 2 to 8. The hole-making method is not limited to drilling; it can also use wire cutting, laser, or other hole-making methods in the art.

Furthermore, the connection way of the components is not limited to threaded connections; they can also be integrally formed or use other conventional connection ways in the art.

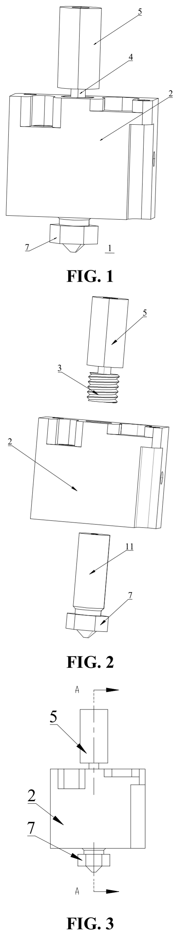

As shown in FIGS. 1, 2, 14, and 15, embodiments of the present invention provide a melting assembly for melting a 3D printing filament. This melting assembly can heat the filament, allowing the filament to flow in the melting assembly, and can improve the melting efficiency of the filament.

As shown in FIGS. 4, 9, 15, and 17, the melting assembly includes a guide member 1. The guide member 1 can guide the preheated filament to flow within the guide member 1, and the guide member 1 simultaneously can heat the filament. The guide member 1 is provided with at least two first flow channels 111 and one second flow channel 112. A plurality of the first flow channels 111 are arranged in a circumferential direction of the second flow channel 112. A cross-sectional area of the second flow channel 112 is smaller than that of the first flow channel 111, thereby achieving a stripping effect on an outer surface of the filament, and allowing the preheated outer surface of the filament to flow into the first flow channels 111. As the inner core has a smaller radial dimension, the inner core flows into the second flow channel 112, and the guide member 1 heats the inner core separately, reducing the influence of material on the outer surface of the filament on the heating of the inner core, improving the heating effect of the guide member 1 on the filament, improving the heating efficiency of the filament, and further increasing the overall melting rate of the filament.

Optionally, the cross-sectional area of the first flow channel 111 can be 5-1 times the cross-sectional area of the second flow channel 112. In this way, the second flow channel 112 can heat the inner core of the filament, improving the heating efficiency. If the cross-sectional area of the second flow channel 112 is designed to be too large, for example, multiple flow channels in the prior art are all of the same size, the filament flowing into the second flow channel 112 will be too thick, further resulting in low melting efficiency of the inner core of the filament in the second flow channel 112.

Optionally, the guide member 1 can directly heat the 3D printing filament or indirectly heat the 3D printing filament.

Herein, the guide member 1 can be a thermal conduction member or a heating member 2.

Understandably, because radial dimensions of multiple flow channels in the current nozzle 6 are consistent, the cross-section of the filament at the center of the formed melting flow channel is relatively thick, and a distance between the filament at the central position and the filament that first comes into contact with heat is relatively large, affecting heating efficiency. In the present embodiment of the present invention, the first flow channel 111 and the second flow channel 112 constitute a melting flow channel. The cross-section of the second flow channel 112, located at the center of the guide member body, is directly set to be smaller than the cross-section of the adjacent first flow channel 111, thus thinning the center of the melting flow channel. In this way, the preheated outer surface of the filament is squeezed into the first flow channel 111, while the inner core of the filament is squeezed into the second flow channel 112, and the guide member 1 heats the inner core separately, reducing the influence of the material on the outer surface of the filament on the heating of the inner core, improving the heating effect of the guide member 1 on the filament, enhancing the heating efficiency of the filament, and further increasing the overall melting rate of the filament.

Optionally, the guide member 1 of the embodiments of the present invention improves the heating efficiency by 36% compared to the conventional single-flow-channel nozzle 6. With the same length, the maximum volumetric flow rate (maximum volume of filament melted per second) achievable in the embodiments of the present invention is approximately 36.8 mm³/s, while the maximum volumetric flow rate achievable with the heating efficiency of the conventional single-flow-channel nozzle 6 is approximately 20 mm³/s, representing an 84% improvement in heating efficiency. It improves the performance of a multi-flow-channel nozzle 6 of the same diameter by approximately 48%.

As shown in FIGS. 5 and 6, as an embodiment, the first flow channels 111 and the second flow channel 112 communicate with each other. The cross-section of at least one first flow channel 111 and the cross-section of the second flow channel 112 lie in the same radial direction within the same cross-section of the guide member 1. This reduces the obstruction to the filament by isolation region between the first flow channel 111 and the second flow channel 112 and improves the smoothness of flow of the filament. Moreover, it also enables the preheated outer surface of the filament to directly enter the first flow channel 111, and the inner core, which receives less heat, can enter the second flow channel 112 for direct heating, thereby improving heating efficiency.

Optionally, the cross-section of at least one first flow channel 111 and the cross-section of the second flow channel 112 lying in the same radial direction within the same cross-section of the guide member 1 means that the axes of at least one first flow channel 111 and the second flow channel 112 are passed through by an extension line in the same radial direction of the guide member 1.

As shown in FIG. 5, as an embodiment, two first flow channels 111 are provided. The cross-sections of the two first flow channels 111 and the cross-section of the second flow channel 112 lie in the same radial direction of the guide member 1, i.e., in the same radial direction within the same cross-section of the guide member 1. This increases the flow volume of the filament and improves smoothness of flow of the filament. The two first flow channels 111 can heat the outer surface of the filament, and the inner core, which receives less heat, can enter the second flow channel 112 for direct heating, further improving heating efficiency.

As shown in FIG. 6, as an embodiment, three first flow channels 111 are provided. All three first flow channels 111 communicate with the second flow channel 112, thereby improving the flowability of the filament, allowing more of the preheated outer surface of the filament to flow into the first flow channels 111, increasing the contact area between the filament and the first flow channels 111, and improving heating efficiency.

As shown in FIG. 6, optionally, three first flow channels 111 are evenly arranged in a circumferential direction of the second flow channel 112, which can improve the uniformity of the filament flowing into the first flow channel 111 and increase the flow rate of the filament entering the first flow channel 111, further improving the heating efficiency of the filament.

Optionally, when the number of first flow channels 111 is three, in some cases, the cross-sections of two of the first flow channels 111 and the cross-section of the second flow channel 112 lie in the same radial direction of the same cross-section of the guide member 1, while the cross-section of another first flow channel 111 and the cross-section of the second flow channel 112 lie in another radial direction of the same cross-section of the guide member 1.

As an embodiment, multiple first flow channels 111 and second flow channel 112 constitute a melting flow channel. A cross-section of the melting flow channel is a closed shape enclosed by multiple arc-shaped sides, thereby increasing the contact area between the guide member 1 and the filament and improving the heating efficiency.

As shown in FIG. 5, optionally, when there are two first flow channels 111, the cross-section of the melting flow channel includes two first arc-shaped sides and two second arc-shaped sides. The two first arc-shaped sides are arc-shaped sides larger than semicircles, and the two second arc-shaped sides are connected to the two first arc-shaped sides, respectively, and a distance between the two second arc-shaped sides is less than a diameter of the first arc-shaped side.

As shown in FIG. 6, when there are three first flow channels 111, the cross-section of the melting flow channel includes three first arc-shaped sides and three second arc-shaped sides. All three first arc-shaped sides are arc-shaped sides larger than semicircles. Each second arc-shaped side is connected to the two adjacent first arc-shaped sides respectively, and the distance between any two opposite second arc-shaped sides is less than the diameter of the first arc-shaped side.

As shown in FIG. 7, as a parallel embodiment, the first flow channels 111 and the second flow channel 112 are arranged at intervals. The cross-section of the second flow channel 112 is smaller than that of the first flow channel 111, thus also enabling the stripping of the inner core of the filament. The second flow channel 112 heats the inner core separately, while the first flow channels 111 heat the outer surface of the filament, thereby improving the heating efficiency of the filament.

The cross-section of the first flow channel 111 is a closed shape enclosed by multiple arc-shaped sides, which can increase the contact area between the guide member 1 and the filament, and improve heating efficiency. The second flow channel 112 can be circular or square. In the present embodiment, as an optional configuration, the second flow channel 112 is circular.

It is worth mentioning that for the guide member body 11 shown in FIGS. 5 to 7, the guide member 1 can also be integrally manufactured with the nozzle 6.

As shown in FIGS. 3 to 7, as an embodiment, the guide member 1 includes the guide member body 11, where the guide member body 11 includes a heating section and a fusion section. The heating section is configured to heat the filament, and the fusion section is configured to collect and fuse the heated filament. A first flow channel 111 and a second flow channel 112 are provided in the heating section, enabling the guide member body 11 to achieve a stripping effect on the outer surface of the filament. This allows the preheated outer surface of the filament to flow into the first flow channel 111, while the inner core, due to its smaller radial dimension, flows into the second flow channel 112. The guide member body 11 heats the inner core separately, reducing the influence of material on the outer surface of the filament on the heating of the inner core, improving the heating effect of the guide member body 11 on the filament, improving the heating efficiency of the filament, and further increasing the overall melting rate of the filament. The fusion section is provided with a fusion flow channel 115, where the fusion flow channel 115 communicates with the first flow channel 111 and the second flow channel 112. This allows the filament, after being heated by the first flow channel 111 and the second flow channel 112, to fuse in the fusion flow channel 115, thereby fusing the outer surface of the filament with the inner core of the filament, improving heating efficiency.

Optionally, the guide member body 11 can be made of copper or aluminum, or other metals with good thermal conductivity.

Optionally, the heating section and the fusion section can be separate structures, connected by threads or riveting, or they can be an integrated structure.

As shown in FIGS. 3 and 4, the melting assembly also includes a heating member 2. The heating member 2 is disposed on an outer surface of the heating section of the guide member body 11, so that the heating member 2 heats the filament in the guide member body 11. The heating member 2 is fixedly connected to the guide member body 11, which can be a threaded connection or a riveted connection, thereby improving the mounting efficiency between the heating member 2 and the guide member body 11 and facilitating mounting and disassembly.

Optionally, in some cases, the heating member 2 can also be disposed on the entire outer surface of the guide member body 11.

Optionally, the heating section in the guide member body 11 employs indirect heating, that is, heat is transferred to the filament through the heating member 2, and the guide member body 11 itself does not produce a heating effect.

As shown in FIGS. 9 to 11, as an embodiment, the heating section includes two parts, that is, a first body 116 and a second body 117. The first body 116 is located at an upper end of the second body 117. The first body 116 is provided with a first flow channel 111 and a second flow channel 112. The second body 117 is provided with at least two third flow channels 113 and a fourth flow channel 114. The third flow channels 113 and the fourth flow channel 114 communicate with each other. The third flow channels 113 and the fourth flow channel 114 each have one end communicating with the first flow channel 111 and the second flow channel 112, and the other end communicating with the fusion flow channel 115. This allows the filament in the first flow channel 111 and the second flow channel 112 to enter the third flow channels 113 and the fourth flow channel 114 for heating, improving the heating effect. Herein, an axis of each third flow channel 113 is set to be misaligned with an axis of the first flow channel 111. The second flow channel 112 and the fourth flow channel 114 are coaxially arranged. Two adjacent third flow channels 113 are provided with a stop portion 20, so that the stop portion 20 can further strip and separate the filament in the first flow channel 111. The filament stripped and separated from the first flow channel 111 flows into the third flow channels 113, and the third flow channels 113 heat the stripped and separated filament again. The second flow channel 112 and the fourth flow channel 114 originally communicate with each other, so that the second flow channel 112 and the fourth flow channel 114 always heat the inner core of the filament. The third flow channels 113 also heat the filament stripped and separated from the first flow channel 111, thereby further improving the heating efficiency of the guide member body 11 on the filament and improving the heating effect.

Optionally, the misalignment of the axis of the third flow channel 113 with the axis of the first flow channel 111 means that the third flow channel 113 and the first flow channel 111 are not coaxial.

Optionally, the cross-section of the third flow channel 113 in the guide member body 11 can be the same as the cross-section of the first flow channel 111, and the cross-section of the fourth flow channel 114 can be the same as the cross-section of the second flow channel 112. Of course, the cross-section of the third flow channel 113 in the guide member body 11 can be different from the cross-section of the first flow channel 111, and the cross-section of the fourth flow channel 114 can be different from the cross-section of the second flow channel 112. Herein, a ratio of the cross-sectional area of the first region 101 to the cross-sectional area of the second region 102 ranges from 5:1 to 1:1. Herein, a ratio of the cross-sectional area of the second region 102 to the cross-sectional area of the filament ranges from 1:7 to 1:2. A ratio of a diameter of the second flow channel 112 to a diameter of the fourth flow channel 114 ranges from 1:5 to 1:1.

Optionally, when there are two first flow channels 111 and two third flow channels 113, a communication area of end faces of the first flow channels 111 and the third flow channels 113 that communicate with each other, i.e., the size of an overlapping end face shared by the first flow channels 111 and the third flow channels 113, should be sufficient to enable the filament to flow normally in the guide member body 11. Because when there are two first flow channels 111 and two third flow channels 113, and the third flow channels 113 and the first flow channels 111 are not coaxial, a situation may arise where the first flow channels 111 and the third flow channels 113 do not communicate, or the area of the end faces of the first flow channels 111 and the third flow channels 113 that communicate with each other is too small. This would negatively affect the normal flow rate of the filament in the guide member body 11.

Optionally, the cross-sectional areas of the second flow channel 112 and the fourth flow channel 114 are 4% to 64% of the cross-sectional area of the heatbreak 4. This enables a stripping effect on the filament when the filament flows into the second flow channel 112, as the cross-section of the second flow channel 112 is smaller than that of the heatbreak 4. At the same time, the cross-sectional areas of the second flow channel 112 and the fourth flow channel 114 can be adjusted according to actual needs to improve the ease of operation.

Optionally, the number of third flow channels 113 in the guide member body 11 corresponds to the number of first flow channels 111. This enables the filament stripped and separated by the stop portion 20 in the first flow channel 111 to enter the third flow channel 113 correspondingly. The filament that has been stripped and separated is heated again through the third flow channel 113, that is, the inner core of the filament in the first flow channel 111 is heated again, and thus the heating efficiency of the melting assembly on the filament can be improved.

As shown in FIGS. 10 to 13, as an embodiment, the guide member body 11 includes a first body 116 and a second body 117. The first body 116 is provided with a first flow channel 111 and a second flow channel 112, and the second body 117 is provided with a third flow channel 113 and a fourth flow channel 114. The second body 117 is inserted into a receiving groove of the first body 116, facilitating assembly between the first body 116 and the second body 117. The second body 117 is fitted to an inner wall surface of the receiving groove of the first body 116, allowing heat to be transferred through the first body 116 and the second body 117 to the filament in the first flow channel 111, the second flow channel 112, the third flow channel 113, and the fourth flow channel 114, thereby improving heating efficiency.

In some cases, the first body 116 and the second body 117 can also be configured as a single piece, i.e., the first body 116 and the second body 117 are an integrally formed structure.

As an embodiment, the first body 116 and the second body 117 are provided with mutually cooperating positioning structures, thereby facilitating the positioning and assembly between the first body 116 and the second body 117. This allows the axis of the assembled third flow channel 113 to be misaligned with the axis of the first flow channel 111, while the second flow channel 112 and the fourth flow channel 114 are coaxial. There is no need to temporarily determine the communication area of the end face of one end of the first flow channel 111 and the third flow channel 113 that communicate with each other during assembly, thereby improving the assembly efficiency between the first body 116 and the second body 117.

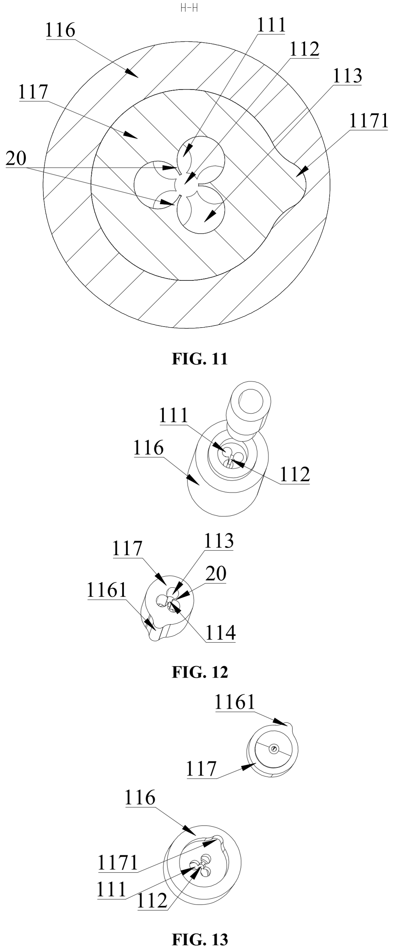

As shown in FIGS. 11 to 13, optionally, the positioning structures can be a positioning groove 1161 provided on the first body 116, and a positioning protrusion 1171 provided on the second body 117 that cooperates with the positioning groove 1161. Of course, the arrangement of the positioning protrusion 1171 and the positioning groove 1161 can also be interchanged, i.e., the second body 117 is provided with the positioning groove 1161, and the first body 116 is provided with the positioning protrusion 1171 that cooperates with the positioning groove 1161.

Optionally, the positioning structure can also be a positioning hole provided on the first body 116, and a through hole correspondingly provided on the second body 117. Positioning is achieved by passing a pin through the through hole and the positioning hole.

Optionally, the positioning groove 1161 on the first body 116 communicates with the receiving groove, meaning that the positioning groove 1161 is arranged to protrude along a side wall of the receiving groove. If the positioning groove 1161 is provided on the second body 117, the structure is the same as that provided on the first body 116.

Optionally, the guide member body 11 is provided with a first spout, where the first spout is located at one end of the fusion section, and a cross-sectional area of the first spout is smaller than the cross-sectional area of the fusion flow channel 115.

As shown in FIGS. 2, 9, 15, and 17, optionally, a top end of the guide member 1 is provided with a mounting groove configured to accommodate a connecting block 3. The melting assembly also includes the connecting block 3, where the connecting block 3 is disposed in the mounting groove and threadedly connected to a groove peripheral wall of the mounting groove for easy mounting. The connecting block 3 is connected to the heatbreak 4. The connecting block 3 is a metal part, so that when the heatbreak 4 conveys the filament to the first flow channel 111 and the second flow channel 112, the connecting block 3 can transfer heat to preheat the filament in the part where the heatbreak 4 is connected to the connecting block 3, achieving a preheating effect. That is, the part where the heatbreak 4 is connected to the connecting block 3 constitutes the preheating section of the melting assembly, thereby softening the filament entering the first flow channel 111 and the second flow channel 112, facilitating the extrusion of 3D printer on the filament, enabling easier flow in the first flow channel 111 and the second flow channel 112, further improving the heating efficiency of the melting assembly for the filament.

Optionally, the connecting block 3 can be made of copper or aluminum alloy.

Optionally, the first body 116 of the guide member body 11 is provided with the mounting groove.

In some cases, the connecting block 3 can also be a structure integrally formed with the heating member 2.

As shown in FIGS. 14 and 15, as another embodiment, the guide member 1 includes a guide member body 11, where the guide member body 11 includes a heating section, which is configured to heat filament. A first flow channel 111 and a second flow channel 112 are provided in the heating section, which enables the first flow channel 111 and the second flow channel 112 in the guide member body 11 to exert a stripping effect on the outer surface of the filament, allowing the preheated outer surface of the filament to flow into the first flow channel 111. That is, after the outer surface of the filament melts, it runs downward through the first flow channel 111, and the inner core of the filament passes through the second flow channel 112. Since the radial dimension of the inner core is relatively small, the inner core flows into the second flow channel 112. The guide member body 11 heats the inner core separately, reducing the influence of the material on the outer surface of the filament on the heating of the inner core and improving the heating effect of the guide member body 11 on the filament. Meanwhile, in the embodiments of the present invention, the first flow channel 111 and the second flow channel 112 are provided in the guide member body 11. The guide member body 11 directly transfers heat to the filament. Compared with the above embodiment, which requires the guide member body 11 to transfer heat, the embodiments of the present invention can further improve the heating efficiency of the filament and further improve the overall melting rate of the filament.

As shown in FIGS. 14 to 17, in embodiments of the present invention, the melting assembly further includes a nozzle 6, where the nozzle 6 is fixedly connected to the guide member body 11. The nozzle 6 is provided with a fusion flow channel 61, and the fusion flow channel 61 communicates with the first flow channel 111 and the second flow channel 112. This allows the filament heated by the first flow channel 111 and the second flow channel 112 to fuse within the fusion flow channel 61, thereby further fusing the outer surface of the filament with the inner core of the filament and improving heating efficiency.

Optionally, the connection method between the guide member body 11 and the nozzle 6 can be a threaded connection or a riveted connection, thereby improving the mounting efficiency between the guide member body 11 and the nozzle 6 and facilitating mounting and disassembly.

As shown in FIGS. 17 to 19, as an embodiment, the heating section in the guide member body 12 includes two parts, that is, a first body 21 and a second body 22. The first body 21 is located at an upper end of the second body 22. The first body 21 is provided with a first flow channel 111 and a second flow channel 112. The second body 22 is provided with at least two third flow channels 113 and a fourth flow channel 114. The third flow channels 113 and the fourth flow channels 114 communicate with each other. The third flow channels 113 and the fourth flow channel 114 each have one end communicating with the first flow channel 111 and the second flow channel 112, and the other end communicating with the fusion flow channel 61. This enables the filament in the first flow channel 111 and the second flow channel 112 to enter the third flow channels 113 and the fourth flow channel 114 for further heating, improving heating effect. Herein, the axis of the third flow channel 113 is set to be misaligned with the axis of the first flow channel 111. The second flow channel 112 and the fourth flow channel 114 are coaxially arranged. Two adjacent third flow channels 113 are provided with a stop portion 20, so that the stop portion 20 can further strip and separate the filament in the first flow channel 111. The third flow channel 113 heats the stripped and separated filament again. The second flow channel 112 and the fourth flow channel 114 originally communicate with each other, so that the second flow channel 112 and the fourth flow channel 114 always heat the inner core of the filament. The third flow channel 113 also heats the filament stripped and separated from the first flow channel 111, thereby further improving the heating efficiency of the guide member body 12 on the filament and improving the heating effect.

Optionally, the cross-section of the third flow channel 113 in the guide member body 12 can be the same as the cross-section of the first flow channel 111, and the cross-section of the fourth flow channel 114 can be the same as the cross-section of the second flow channel 112. Of course, the cross-section of the third flow channel 113 in the guide member body 12 can be different from the cross-section of the first flow channel 111, and the cross-section of the fourth flow channel 114 can be different from the cross-section of the second flow channel 112. Herein, a ratio of the cross-sectional area of the first region 101 to the cross-sectional area of the second region 102 ranges from 5:1 to 1:1. Herein, a ratio of the cross-sectional area of the second region 102 to the cross-sectional area of the filament ranges from 1:7 to 1:2. A ratio of the diameter of the second flow channel 112 to the diameter of the fourth flow channel 114 ranges from 1:5 to 1:1.

Optionally, the misalignment of the axis of the third flow channel 113 with the axis of the first flow channel 111 means that the third flow channel 113 and the first flow channel 111 are not coaxial.

Optionally, when there are two first flow channels 111 and two third flow channels 113, a communication area of end faces of the first flow channels 111 and the third flow channels 113 that communicate with each other, i.e., the size of an overlapping end face shared by the first flow channels 111 and the third flow channels 113, should be sufficient to enable the filament to flow normally in the guide member body 12. Because when there are two first flow channels 111 and two third flow channels 113, and the third flow channel 113 and the first flow channel 111 are not coaxial, a situation may arise where the first flow channels 111 and the third flow channels 113 do not communicate, or the area of the end faces of the first flow channels 111 and the third flow channels 113 that communicate with each other is too small. This would negatively affect the normal flow rate of the filament in the guide member body 12.

Optionally, the number of third flow channels 113 in the guide member body 12 corresponds to the number of first flow channels 111. This enables the filament stripped and separated by the stop portion 20 in the first flow channel 111 to enter the third flow channel 113 correspondingly. The filament that has been stripped and separated is heated again through the third flow channel 113, that is, the inner core of the filament in the first flow channel 111 is heated again, and thus the heating efficiency of the melting assembly on the filament can be improved.

As shown in FIG. 17, optionally, in the present embodiment, a top end of the guide member body 12 is also provided with a mounting groove configured to accommodate the connecting block 3. The melting assembly also includes the connecting block 3, where the connecting block 3 is disposed in the mounting groove and threadedly connected to a groove peripheral wall of the mounting groove for easy mounting. The connecting block 3 is connected to the heatbreak 4. The connecting block 3 is a metal part, so that when the heatbreak 4 conveys the filament to the first flow channel 111 and the second flow channel 112, the connecting block 3 can transfer heat to preheat the filament in the part where the heatbreak 4 is connected to the connecting block 3, achieving a preheating effect. That is, the part where the heatbreak 4 is connected to the connecting block 3 constitutes the preheating section of the melting assembly, thereby softening the filament entering the first flow channel 111 and the second flow channel 112, facilitating the extrusion of 3D printer on the filament, enabling easier flow in the first flow channel 111 and the second flow channel 112, further improving the heating efficiency of the melting assembly for the filament.

Optionally, the connecting block 3 can be made of copper or aluminum alloy.

In some cases, the connecting block 3 can also be a structure integrally formed with the guide member body 12.

As shown in FIGS. 17 to 19, as an embodiment, the guide member body 12 includes a first body 21 and a second body 22. The first body 21 is provided with a first flow channel 111 and a second flow channel 112, and the second body 22 is provided with a third flow channel 113 and a fourth flow channel 114. The second body 22 is inserted into the receiving groove of the first body 21, facilitating assembly between the first body 21 and the second body 22. The second body 22 is fitted to an inner wall surface of the receiving groove of the first body 21, allowing heat to be transferred through the first body 21 and the second body 22 to the filament in the first flow channel 111, the second flow channel 112, the third flow channel 113, and the fourth flow channel 114, thereby improving heating efficiency.

In some cases, the first body 21 and the second body 22 can also be configured as a single piece, i.e., the first body 21 and the second body 22 are an integrally formed structure.

As an embodiment, the first heating unit and the second heating unit are provided with mutually cooperating positioning structures, thereby facilitating the positioning and assembly between the first body 21 and the second body 22. This allows the axis of the assembled third flow channel 113 to be misaligned with the axis of the first flow channel 111, while the second flow channel 112 and the fourth flow channel 114 are coaxial. There is no need to temporarily determine the communication area of the end face of one end of the first flow channel 111 and the third flow channel 113 that communicate with each other during assembly, thereby improving the assembly efficiency between the first body 21 and the second body 22.

As shown in FIG. 19, optionally, the positioning structure can be a positioning groove 1161 provided on the first body 21, and a positioning protrusion 1171 provided on the second body 22 that cooperates with the positioning groove 1161. Of course, the arrangement of the positioning protrusion 1171 and the positioning groove 1161 can also be interchanged, i.e., the second body 22 is provided with the positioning groove 1161, and the first body 21 is provided with the positioning protrusion 1171 that cooperates with the positioning groove 1161.

Optionally, the positioning structure can also be a positioning hole provided on the first body 21, and a through hole correspondingly provided on the second body 117. Positioning is achieved by passing a pin through the through hole and the positioning hole.

Optionally, the positioning groove 1161 on the first body 21 communicates with the receiving groove, meaning that the positioning groove 1161 is arranged to protrude along a side wall of the receiving groove. If the positioning groove 1161 is provided on the second body 22, the structure is the same as that provided on the first body 21.

Optionally, the nozzle 6 is provided with a second spout at the end away from the guide member body 12, and a cross-sectional area of the second spout is smaller than the cross-sectional area of the fusion flow channel 61.

Optionally, the melting assembly also includes a heat-insulating member, where the heat-insulating member is located on an outer periphery of the guide member 1 and can provide thermal insulation for the guide member 1, thereby further improving the heating effect of the guide member 1 on the filament.

Optionally, in an embodiment, the heat-insulating member is located on the outer periphery of the guide member body, sleeved on an outer periphery of the heating member 2, and tightly fitted to the heating member 2. In another embodiment, the heat-insulating member is sleeved on the outer periphery of the guide member body.

Optionally, the material of the heat-insulating member can be glass wool, rock wool, or mineral wool, etc.

As shown in FIGS. 1, 8, 14, and 16, optionally, a nozzle mounting portion 7 is provided on the outer periphery of the guide member 1. The nozzle mounting portion 7 protrudes outward along a radial direction of the guide member 1. The nozzle mounting portion 7 can have a hexagonal prism structure to facilitate assembly of the guide member 1 with the heating member 2 or the nozzle 6.

Optionally, the nozzle mounting portion 7 can be a nut, and the nozzle mounting portion 7 is fixedly connected to the guide member body, thereby facilitating assembly between the guide member body and the heating member 2. Furthermore, a nut can also be provided on the outer periphery of the heating member 2.

Of course, in another embodiment, the nozzle mounting portion 7 is also fixedly connected to the guide member body to facilitate assembly between the guide member body and the nozzle 6. Furthermore, a nut can also be provided on an outer periphery of the nozzle 6.

Optionally, the nozzle mounting portion 7 can also be integrally formed with the guide member 1.

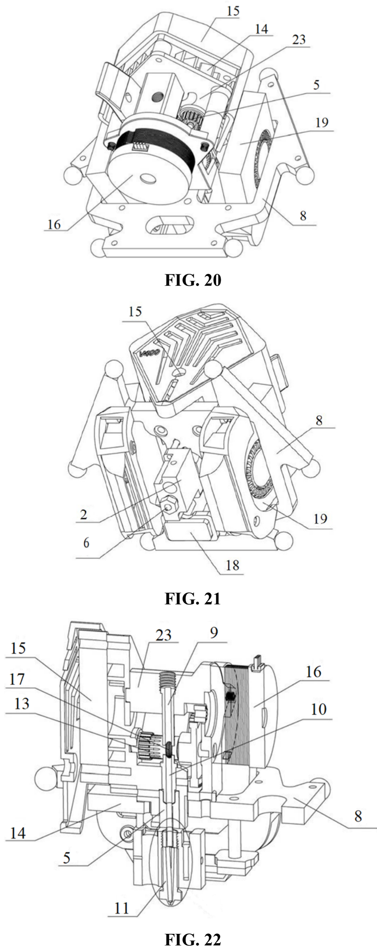

As shown in FIGS. 20 to 22, the embodiments of the present invention provide a 3D printer, including a melting assembly for melting a 3D printing filament as provided in the first aspect. The 3D printer also includes a heatbreak 4, where the heatbreak 4 is connected to the guide member 1 via a connecting block 3, and is configured to deliver the filament into the guide member 1, enabling the filament to flow in the first flow channel 111 and the second flow channel 112.

Optionally, the connection between the heatbreak 4 and the guide member 1 via the connecting block 3 includes a direct connection and an indirect connection. The indirect connection between the heatbreak 4 and the guide member body via the connecting block 3 is achieved by a heating member 2, while the direct connection between the heatbreak 4 and the guide member body is achieved via the connecting block 3.

Optionally, one end of the heatbreak 4 communicates with the first flow channel 111 and the second flow channel 112 in the guide member body. One end of the heatbreak 4 communicates with the first flow channel 111 and the second flow channel 112 in the guide member body.

Optionally, a connection portion between the heatbreak 4 and the connecting block 3 is arranged in a spiral configuration within the connecting block 3 along an axial direction of the connecting block 3. This can extend the preheating duration of the filament in the heatbreak 4 within the connecting block 3, thereby improving the preheating effect of the 3D printer on the filament.

Optionally, if the spiral portion of the heatbreak 4 within the connecting block 3 is replaced with a straight segment, it is approximately 10 mm in length.

As shown in FIGS. 4, 9, 15, 17, and 22, optionally, the heatbreak 4 is connected to the 3D printer via a fixing block 5. A gap is provided between the fixing block 5 and the guide member 1, which can reduce heat transfer to the position of the fixing block 5, and prevent clogging caused by softening of the filament.

Optionally, the gap between the fixing block 5 and the guide member 1 can be 5 mm, or also can be any other value.

As shown in FIGS. 20 to 22, optionally, the 3D printer also includes a hanging platform 8. An extruder 23 is provided above the hanging platform 8. The extruder 23 includes the guide member 1, allowing the filament to be extruded into the guide member 1 via the extruder 23.

As shown in FIGS. 20 and 22, optionally, the extruder 23 includes an upper guide sleeve 9, and a guide tube 10 is arranged at interval below the upper guide sleeve 9. A filament feeding wheel 13 is provided between the upper guide sleeve 9 and the guide tube 10. The heatbreak 4 is connected to a lower end of the guide tube 10, and the heating member 2 or the guide member body is connected to a lower end of the heatbreak 4. Heat sinks 14 are provided on the outside of the guide tube 10 and the heatbreak 4, and a cooling ventilator 15 is provided on the outside of the heat sinks 14. A motor 16 is provided on the outside of the extruder 23 to drive the filament feeding wheel 13 to rotate. The filament is inserted from the upper guide tube 10 and guided by the filament feeding wheel 13. The filament is fed into the guide tube 10 and enters the heatbreak 4 from the lower end of the guide tube 10. The heating member 2 outside the guide member body or the guide member body outside the nozzle 6 heats the filament. When the filament enters the first flow channel 111 and the second flow channel 112 of the guide member body, or the first flow channel 111 and the second flow channel 112 of the guide member body from the heatbreak 4, it melts under the heat, becoming a fluid within the guide member body or inside the guide member body, and is extruded from the first spout or the second spout to complete the printing.

Optionally, the motor 16 provides an acting force for filament extrusion, and the heat sinks 14 and the cooling ventilator 15 are configured for heat dissipation to lower the temperature of the extruder 23.

As shown in FIG. 22, optionally, to enhance the stability of filament feeding, the filament feeding wheel 13 is provided with a filament feeding groove 17. The position of the filament feeding groove 17 corresponds to the position of the guide tube 10. Multiple grooves are evenly distributed on the filament feeding groove 17, and the multiple grooves increase force of friction.

As shown in FIG. 21, optionally, a leveling module 18 is provided below the hanging platform 8. The leveling module 18 levels the hanging platform 8 before printing, improving the dimensional accuracy of printing.

As shown in FIGS. 20 and 21, optionally, cooling devices are provided on two sides of the hanging platform 8 outside heating module, where the cooling devices are cooling fans 19. These cooling devices cool the extruded filament, thus accelerating the filament forming speed and improving print quality.

In summary, in the first aspect, the present invention proposes a guide member 1 and a manufacturing method therefor. The guide member 1 can guide the preheated filament to flow within the guide member 1. By providing the first region 101 and the second region 102, with the cross-sectional area of the second region 102 being smaller than the cross-sectional area of the filament, the outer periphery of the filament is stripped as the preheated filament passes through the second region 102. The core of the stripped filament passes through the first region 101, while the core of the filament continues to be heated and melted within the second region 102. This arrangement reduces the distance between the core and the body of the filament, as well as the thermal conduction distance, thereby enabling the entire filament to be heated and melted quickly and uniformly. This increases the amount of filament melted per unit time and the uniformity of melting, reducing the impact of insufficient melting of the core of the filament on the discharging and printing quality.

In the second aspect, the present invention proposes a guide assembly and a manufacturing method therefor. The guide member 1 thereof can guide the preheated filament to flow within the guide member 1. At least two coaxial guide members 1 connected end-to-end can sequentially strip the core of the filament in multiple stages. This arrangement enables the entire filament to be heated and melted more quickly and uniformly, increasing the amount of filament melted per unit time and the uniformity of melting, and reducing the impact of insufficient melting of the core of the filament on feeding and discharging. Moreover, the guide assembly is easy to assemble and process.

In the third aspect, the present invention proposes a melting assembly for melting a 3D printing filament. By providing at least two first flow channels 111 and one second flow channel 112 in the guide member 1, with the multiple first flow channels 111 arranged in the circumferential direction of the second flow channel 112, and the cross-sectional area of the second flow channel 112 being smaller than the cross-sectional area of the filament, the second flow channel 112 can exert a stripping effect on the outer surface of the filament, allowing the preheated outer surface of the filament to flow into the first flow channels 111. The inner core has a smaller radial dimension, so the inner core flows directly into the second flow channel 112, achieving separate heating of the inner core. This reduces the influence of material on the outer surface of the filament on the heating of the inner core, improving the heating effect of the guide member 1 on the filament. Because the volume of the preheated outer surface of the filament is larger than the volume of the inner core, and the cross-sectional area of the second flow channel 112 is smaller than that of the first flow channel 111, the softened outer surface of the preheated filament can flow as much as possible into the first flow channel 111, reducing the resistance for the stripped-away outer surface to pass through the first flow channels 111. Only the unsoftened inner core enters the second flow channel 112, shortening a heating distance for the inner core, achieving faster heating of the inner core, improving heating efficiency of the filament, and further increasing the overall melting rate of the filament.

The above are merely for embodiments of the present invention and are not intended to limit the scope of protection of the present invention. Various modifications and variations could be made to the present invention by those skilled in the art. Any modifications, equivalent substitutions, or improvements made within the spirit and principles of the present invention shall be included within the scope of protection of the present invention.

The above are merely for specific embodiments of the present invention, but the scope of protection of the present invention is not limited thereto. Any variations or substitutions that can be easily conceived by any technicians familiar with the present technical field within the scope of the technology disclosed in the present invention shall be included within the scope of protection of the present invention. Therefore, the scope of protection of the present invention shall be determined by the scope of protection of the claims.

It should be noted that, in this document, relational terms such as "first" and "second" are used only to distinguish one entity or operation from another entity or operation, and do not necessarily require or imply any such actual relationship or order between these entities or operations. Furthermore, the terms "comprising," "including," or any other variations thereof are intended to cover non-exclusive inclusion, such that a process, method, article, or apparatus that includes a list of elements includes not only those elements but also other elements not expressly listed, or elements inherent to such a process, method, article, or apparatus. Without further limitations, an element defined by the phrase "including a..." does not exclude the presence of other identical elements in the process, method, article, or apparatus that includes the element.

### INDUSTRIAL APPLICABILITY

The present invention can strip the outer surface of the heated filament and directly heat the inner core of the filament, thereby increasing the heating rate of the filament. At the same time, it can also sequentially strip the core of the filament in multiple stages. This arrangement enables the entire filament to be heated and melted more quickly and uniformly, thus increasing the amount of filament melted per unit time and the uniformity of melting, and reducing the impact of insufficient melting of the core of the filament on feeding and discharging.

## Claims

1. A melting assembly for melting a 3D printing filament, **characterized by** comprising:
a guide member, configured to guide the 3D printing filament that has been preheated to flow and configured to heat the 3D printing filament, wherein the guide member is provided with at least two first flow channels and one second flow channel, the first flow channels are arranged in a circumferential direction of the second flow channel, and a cross-sectional area of the second flow channel is smaller than a cross-sectional area of the first flow channel.

2. The melting assembly according to claim 1, **characterized in that** two first flow channels are provided, cross-sections of the two first flow channels and a cross-section of the second flow channel lie in a same radial direction of the guide member, or three first flow channels are provided, the cross-sections of the three first flow channels and the cross-section of the second flow channel lie in the same radial direction of the guide member.

3. The melting assembly according to claim 2, **characterized in that** the first flow channels communicate with the second flow channel; or the first flow channels and the second flow channel are arranged at intervals.

4. The melting assembly according to claim 1, **characterized in that** the guide member is connected to a nozzle, and the guide member comprises a heating section and a fusion section, the heating section being provided with the first flow channels and the second flow channel;
the fusion section being provided with a fusion flow channel, wherein the fusion flow channel communicates with the first flow channels and the second flow channel; and
the melting assembly further comprises a heating member, wherein the heating member is disposed on an outer surface of the heating section and fixedly connected to the nozzle.

5. The melting assembly according to claim 4, **characterized in that** the heating section comprises a first body and a second body, wherein the first body is provided with the first flow channels and the second flow channel, the second body is provided with at least two third flow channels and one fourth flow channel, and each of the third flow channels and the fourth flow channel has one end communicating with the first flow channels and the second flow channel, and the other end communicating with the fusion flow channel.

6. The melting assembly according to claim 5, **characterized in that** axes of the third flow channels are set to be misaligned with axes of the first flow channels, and the second flow channel and the fourth flow channel are coaxially arranged.

7. The melting assembly according to claim 6, **characterized in that** two adjacent third flow channels are provided with a stop portion, and the first body and the second body are provided with mutually cooperating positioning structures.

8. A guide member, **characterized by** comprising a body and a flow channel located within the body, wherein the flow channel comprises a first region and a second region, a central axis of the body passes through the second region, and a cross-sectional area of the second region is smaller than a cross-sectional area of a filament.

9. The guide member according to claim 8, **characterized in that** the flow channel comprises at least two first flow channels, wherein the at least two first flow channels are arranged in an overlapping way, a circumscribed cylinder of an overlapping portion of the at least two first flow channels constitutes the second region, and portions of the at least two first flow channels outside the circumscribed cylinder constitute the first region.

10. The guide member according to claim 8, **characterized in that** the flow channel comprises at least two first flow channels and one second flow channel, the second flow channel being located at a center of the first flow channels, and the second flow channel independently constituting the second region.

11. The guide member according to claim 9 or 10, **characterized in that** cross-sections of the first flow channels and/or a cross-section of the second flow channel is any one selected from the group consisting of a circular shape, a triangular shape, a square shape, a rectangular shape, a polygonal shape, an elliptical shape, and a closed shape enclosed by multiple arc-shaped sides.

12. The guide member according to claim 11, **characterized in that** the cross-sections of the first flow channels and the second flow channel are circular, a ratio of a cross-sectional diameter of the first flow channel to that of the second flow channel is 5-0.5, and/or a ratio of the cross-sectional diameter of the second flow channel to that of the filament is 0.1-0.9.

13. The guide member according to claim 12, **characterized in that** there are three first flow channels, the ratio of the cross-sectional diameter of the first flow channel to that of the second flow channel is 1:1, and/or a ratio of the cross-sectional diameter of the filament to that of the second flow channel is 2:1.

14. The guide member according to any one of claims 8 to 10, **characterized in that** the guide member is provided with an inlet at one end and is connected to a nozzle at the other end, the cross-sectional area of the second region decreases gradually or decreases stepwise from the inlet to the nozzle, and/or the cross-sectional area of the first region increases gradually or increases stepwise from the inlet to the nozzle.

15. A guide assembly, **characterized by** comprising at least two guide members according to any one of claims 8 to 13, the guide members being coaxial and connected end-to-end, the first regions of the guide members communicating with each other, and the second regions of the guide members communicating with each other.

16. The guide assembly according to claim 15, **characterized in that** the guide assembly is provided with an inlet at one end and is connected to a nozzle at the other end, and a cross-sectional area of the second region of each of the guide members decreases gradually or decreases stepwise from the inlet to the nozzle.

17. The guide assembly according to claim 16, **characterized in that** the guide assembly comprises one guide member according to claim 9 and one guide member according to claim 10; the guide member according to claim 10 has the inlet at one end, and the guide member according to claim 9 is connected to the nozzle.

18. The guide assembly according to any one of claims 15-17, **characterized in that** the first regions of the at least two guide members communicate with each other and are not coaxial.

19. The guide assembly according to any one of claims 15-17, **characterized in that** the inlet comprises a conical portion.

20. A 3D printer, **characterized by** comprising:
the melting assembly for melting the 3D printing filament according to any one of claims 1-7, or
the guide member according to any one of claims 8-14, or
the guide assembly according to any one of claims 15-19; and
a heatbreak, wherein the heatbreak is connected to an inlet of the guide member via a connecting block, the heatbreak is configured to deliver the filament into the guide member, and the connecting block is configured to transfer heat to the 3D printing filament in the heatbreak to preheat the 3D printing filament.

21. A manufacturing method for a guide member, **characterized by** comprising steps of:
preparing a first region on a body, wherein the first region penetrates the body, and the first region is configured to allow an outer surface portion of a filament to pass through; and
preparing a second region on the body, wherein the second region penetrates the body, a central axis of the body passes through the second region, and the second region is configured to allow a core of the filament to pass through.

22. The manufacturing method for a guide assembly according to claim 21, **characterized in that** the steps of preparing the first region on the body and the preparing the second region on the body comprise:
preparing at least two first flow channels on a columnar body, the at least two first flow channels overlapping, a circumscribed cylinder of an overlapping portion of the at least two first flow channels constituting the second region, and portions of the at least two first flow channels outside the circumscribed cylinder constituting the first region; or
preparing at least two non-overlapping first flow channels on the columnar body;
preparing one second flow channel between the at least two first flow channels, the second flow channel forming the second region independently, and regions of the at least two first flow channels excluding the second flow channel constituting the first region.

23. A manufacturing method for a guide assembly, **characterized by** comprising steps of:
preparing at least two first flow channels on a body, the at least two first flow channels axially penetrating the body; and
preparing one second flow channel at a center of the at least two first flow channels at one end of the body, a length of the second flow channel being less than that of the first flow channels.

24. The manufacturing method according to claim 23, **characterized by** further comprising a step of preparing one fourth flow channel at the center of the at least two first flow channels at the other end of the body, wherein
the fourth flow channel communicates with the second flow channel, and a cross-sectional area of the fourth flow channel is less than a cross-sectional area of the second flow channel.

25. The manufacturing method according to claim 24, **characterized in that** cross-sections of the second flow channel and the fourth flow channel are circular, and a ratio of a cross-sectional diameter of the fourth flow channel to that of the second flow channel is 0.1-0.9.
